# EUROPÄISCHE PATENTANMELDUNG

(11) **EP 0 605 762 A1**
(43) Veröffentlichungstag der Anmeldung: **13.07.1994**
(21) Anmeldenummer: 93117635.8
(22) Anmeldetag: 30.10.1993
(51) Int. Cl.: F16N 13/06, F04B 43/08

(54) **Apparat für die dosierte Abgabe von einem Schmiermittelfluid**

(30) Priorität: 05.12.1992 DE 4241073
(71) Anmelder: Satzinger GmbH & Co., D-97717 Euerdorf (DE)
(72) Erfinder: Graf, Walter, Dipl.-Ing., D-97717 Euerdorf (DE)
(74) Vertreter: Andrejewski, Walter, Dr.

(57) **Zusammenfassung**

Apparat für die dosierte Abgabe von einem Fluid, insbesondere von einem Schmiermittelfluid. Zum grundsätzlichen Aufbau gehören ein Fluidbehälter (1), eine mit dem Fluidbehälter (1) in Verbindung stehende Dosierpumpe (2) mit Pumpenkammer (3), eine Fluidaustrittsdüse (4) und eine Betätigungsvorrichtung (5) für die Dosierpumpe (2). Die Dosierkammer (3) besitzt eine aus einem Schlauchabschnitt bestehende Pumpenkammer (3), die über ein Rückschlagventil (7) an den Fluidbehälter (1) angeschlossen ist, welches Rückschlagventil (7) bei Druckaufbau in der Pumpenkammer (3) schließt. Die Betätigungseinrichtung besteht aus einem quer zur Achse des Schlauchabschnittes beweglichen Quetschstößel (8) und einem Betätigungshebel (9) für den Quetschstößel (8), mit dem der Schlauchabschnitt zusammenquetschbar ist und der zurückstellbar ist. Auf den Betätigungshebel (9) arbeitet ein Hubmagnet (10) mit einer den Betätigungshebel (9) beaufschlagenden Stellstange, die zurückstellbar ist. Der Hubmagnet (10) ist mit Hilfe einer elektrischen Steuereinrichtung zeitabhängig und/oder fluidbedarfsabhängig steuerbar.

## Beschreibung

Die Erfindung betrifft einen Apparat für die dosierte Abgabe von einem Fluid, insbesondere von einem Schmiermittelfluid, - mit Fluidbehälter, mit dem Fluidbehälter in Verbindung stehender Dosierpumpe mit Pumpenkammer, an die Pumpenkammer angeschlossener Fluidaustrittsdüse und Betätigungseinrichtung. Fluid bezeichnet im Rahmen der Erfindung ein praktisch inkompressibles flüssiges oder pastöses Medium. - Apparate des beschriebenen Aufbaus werden in den verschiedensten Bereichen der Technik benötigt, beispielsweise in der chemischen Industrie zur dosierten Zugabe eines Fluids zu einer einer Mischung, insbesondere aber zur Abgabe eines Schmiermittelfluids an eine Maschine, die einen entsprechenden Schmiermittelbedarf aufweist.

Bei dem aus der Praxis bekannten Apparat, von dem die Erfindung ausgeht, besitzt die Dosierpumpe eine aus einem Schlauchabschnitt bestehende Pumpenkammer, die über ein Rückschlagventil an den Fluidbehälter angeschlossen ist, welches Rückschlagventil bei Druckaufbau in der Pumpenkammer schließt. Die Betätigungseinrichtung besteht aus einem quer zur Achse des Schlauchabschnittes beweglichem Quetschstößel und einem Betätigungshebel. Der Betätigungshebel wird von Hand betätigt. Der Hub bestimmt die Dosierung. In vielen Bereichen der Technik, kann eine solche Handbetätigung des Betätigungshebels nicht oder nur gefährlich verwirklicht werden. Das gilt insbesondere bei laufenden Maschinen, bei Kraftfahrzeugen und Motorrädern im Bereich arbeitender Teile, bei Motorrädern insbesondere auch im Bereich der Antriebkette. Im übrigen besteht Bedarf nach einem Apparat der angegebenen Zweckbestimmung, der automatisch betätigbar ist.

Der Erfindung liegt die Aufgabe zugrunde, einen Apparat des vorstehend beschriebenen Aufbaus so weiter auszubilden, daß eine dosierte Abgabe des Fluids, in sehr genauer Dosierung und in sehr genau einstellbaren Dosierungszeitabständen, durchgeführt werden kann.

Zur Lösung dieser Aufgabe lehrt die Erfindung, ausgehend von dem eingangs beschriebenen Apparat, die Kombination der folgenden, im einzelnen an sich bekannten Merkmale:
a) Die Dosierpumpe besitzt eine aus einem Schlauchabschnitt bestehende Pumpenkammer, die über ein Rückschlagventil an den Fluidbehälter angeschlossen ist, welches Rückschlagventil bei Druckaufbau in der Pumpenkammer schließt,
b) die Betätigungseinrichtung besteht aus einem quer zur Achse des Schlauchabschnittes beweglichem Quetschstößel und einem Betätigungshebel für den Quetschstößel, mit dem der Schlauchabschnitt zusammenquetschbar ist und der rückstellbar ist,
c) auf dem Betätigungshebel arbeitet ein Hubmagnet mit einer den Betätigungshebel beaufschlagenden Stellstange, die zurückstellbar ist,
wobei der Hubmagnet mit Hilfe einer elektrischen Steuereinrichtung zeitabhängig und/oder fluidbedarfsabhängig steuerbar ist. Der Ausdruck Schlauchabschnitt umfaßt entsprechende, elastisch verformbare Hülsen. - Bei dem erfindungsgemäßen Apparat kann die Zurückstellung des Quetschstößels über die elastische Rückfederung des Schlauchabschnittes, aber auch über eine besondere Rückstellfeder erfolgen. Die Rückstellung der Stellstange des Hubmagneten erfolgt über magnetische Kräfte oder über Federkräfte, sie kann aber grundsätzlich ebenfalls aus der elastischen Rückstellung des Schlauchabschnittes abgeleitet werden, wenn dessen Rückstellkräfte ausreichend groß sind.

Die durch die Erfindung erreichten Vorteile sind darin zu sehen, daß der eingangs beschriebene bekannte Apparat mit verhältnismäßig geringem Aufwand einer umfangreicheren Anwendung zugeführt werden kann, wobei eine Handbetätigung des Apparates nicht mehr erforderlich ist und zugleich mit einem einfachen zusätzlichen Bauteil, nämlich dem Hubmagneten, eine zeitabhängige und/oder fluidbedarfsabhängige Steuerung mit Hilfe einer einfachen elektrischen Steuereinrichtung erfolgen kann.

Im einzelnen bestehen im Rahmen der Erfindung mehrere Möglichkeiten der weiteren Ausbildung und Gestaltung. So kann die Fluidaustrittsdüse über ein Überströmventil an die Pumpenkammer angeschlossen sein. Solche Überströmventile sind im allgemeinen federbelastet und durch die Federbeaufschlagung rückstellbar. Es können aber im Rahmen der Erfindung auch das für die Fluidaufnahme eingerichtete Volumen der Bauteile in Strömungsrichtung des Fluids hinter der Pumpe sowie der Strömungswiderstand dieser Bauteile, einschließlich der Fluidaustrittsdüse, so eingerichtet sein, daß bei der Rückstellbewegung des Quetschstößels keine Luft in die Pumpenkammer eindringt. Es versteht sich, daß bei Inbetriebnahme des erfindungsgemäßen Apparates die Luft aus dem System auf an sich bekannte Weise entfernt werden muß.

Nach bevorzugter Ausführungsform der Erfindung besitzt der Betätigungshebel einen dosierend wirkenden Stellweg, der durch einen verstellbaren Anschlag, z. B. durch eine Schraube, einstellbar ist, wobei die Dosierung über den Stellweg des Betätigungshebels erfolgt. Man kann aber in Abweichung von dieser Ausführungsform so vorgehen, daß der Hubmagnet einen vorgegebenen Hubweg aufweist, der einerseits durch einen festen oberen Anschlag und andererseits nach Maßgabe der gewünschten Dosierung durch den Stellweg des Betätigungshebels begrenzt ist. Es versteht sich, daß man in einem solchen Falle auch alle Rückstellbewegungen von dem Hubmagneten ableiten kann. Der Hubweg des Hubmagneten ist über dessen Magnetsystem und gegebenenfalls durch mechanische Anschläge begrenzt.

Im Rahmen der Erfindung kann mit den verschiedensten Fluidbehältern gearbeitet werden. Insbesondere kann der Fluidbehälter als ein vom Atmosphärendruck beaufschlagter Behälter ausgeführt sein. Es besteht aber auch die Möglichkeit, den Fluidbehälter von einem im Fluidbehälter erzeugten Gasdruck zu beaufschlagen (vgl. zum Beispiel DE 42 09 776.2 A1).

Im Rahmen der modernen elektrischen und elektronischen Steuerungstechnik besteht ohne weiteres die Möglichkeit, die Auslegung so zu treffen, daß die Steuereinrichtung den Hubmagneten mit einstellbarer Impulsdauer beaufschlagt. Entsprechende Steuereinrichtungen gehören zum Stand der Technik. Es kann die Steuereinrichtung den Hubmagneten auch nach Maßgabe eines Zeitrelais taktweise beaufschlagen.

Der erfindungsgemäße Apparat ist von besonderer Bedeutung in der Anwendung auf ein Kraftfahrzeug. Hier lehrt die Erfindung, daß die Steuereinrichtung den Hubmagneten direkt oder indirekt nach Maßgabe der Drehzahl des Motors und/oder nach Maßgabe der Geschwindigkeit des Fahrzeuges betätigt.

Im folgenden wird die Erfindung anhand einer lediglich ein Ausführungsbeispiel darstellenden Zeichnung ausführlicher erläutert. Es zeigen in schematischer Darstellung
- Fig. 1: eine Seitenansicht eines erfindungsgemäßen Apparates teilweise im Schnitt,

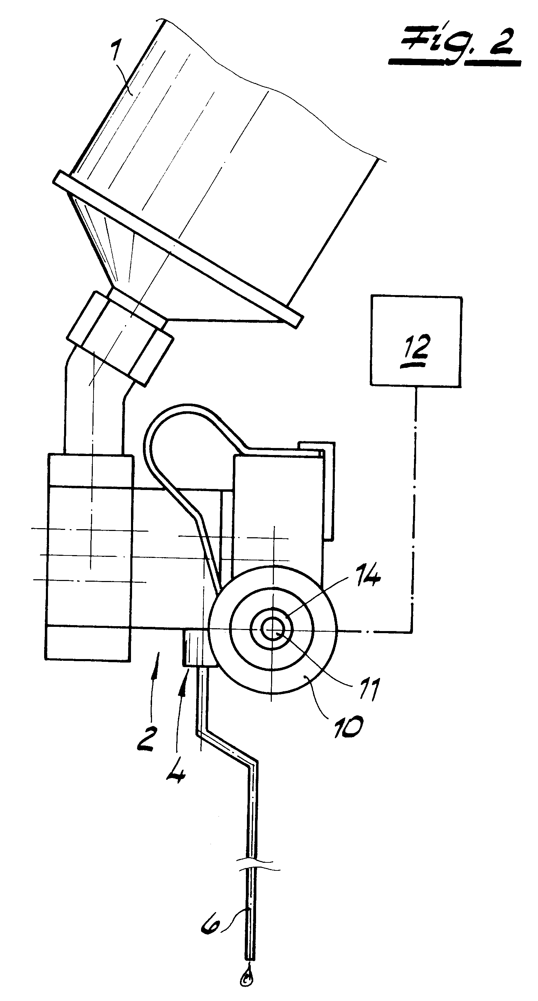

- Fig. 2: den Gegenstand nach Fig. 1 aus Richtung des Pfeiles A,

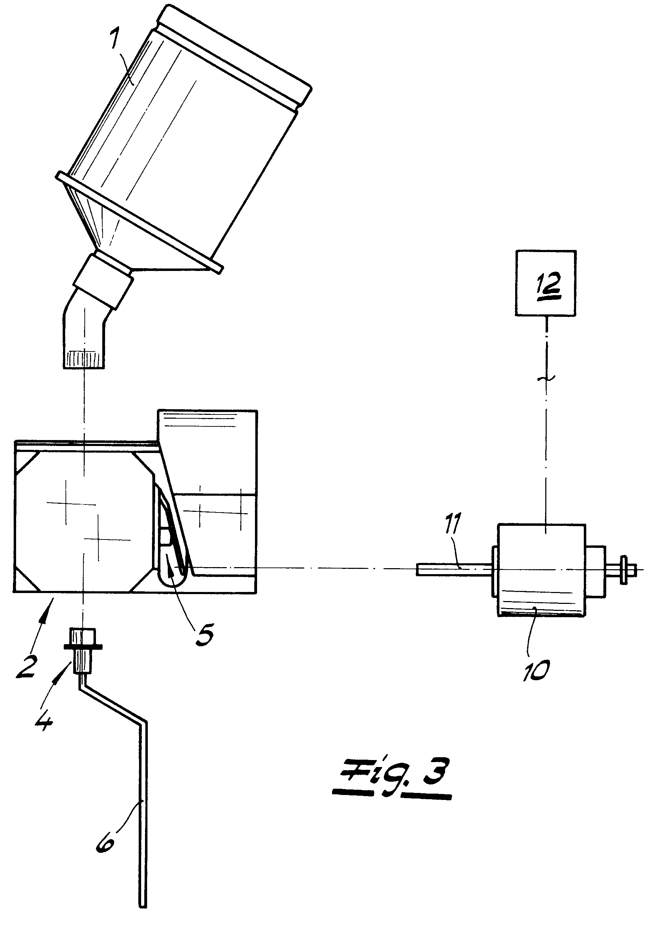

- Fig. 3: in gegenüber den Fig. 1 und 2 verkleinertem Maßstab die Bauteile des Gegenstandes der Fig. 1, auseinandergezogen.

Der in den Figuren dargestellte Apparat ist für die dosierte Abgabe von einem Fluid, insbesondere von einem Schmiermittelfluid, eingerichtet. Zum grundsätzlichen Aufbau gehören
ein Fluidbehälter 1,
eine mit dem Fluidbehälter 1 in Verbindung stehende Dosierpumpe 2 mit Pumpenkammer 3,
eine an die Pumpenkammer 3 angeschlossene Fluidaustrittsdüse 4 und
eine Betätigungseinrichtung 5 für die Dosierpumpe 3.

Im Ausführungsbeispiel ist an die Fluidaustrittsdüse 4 eine Düsennadel 6 angeschlossen.

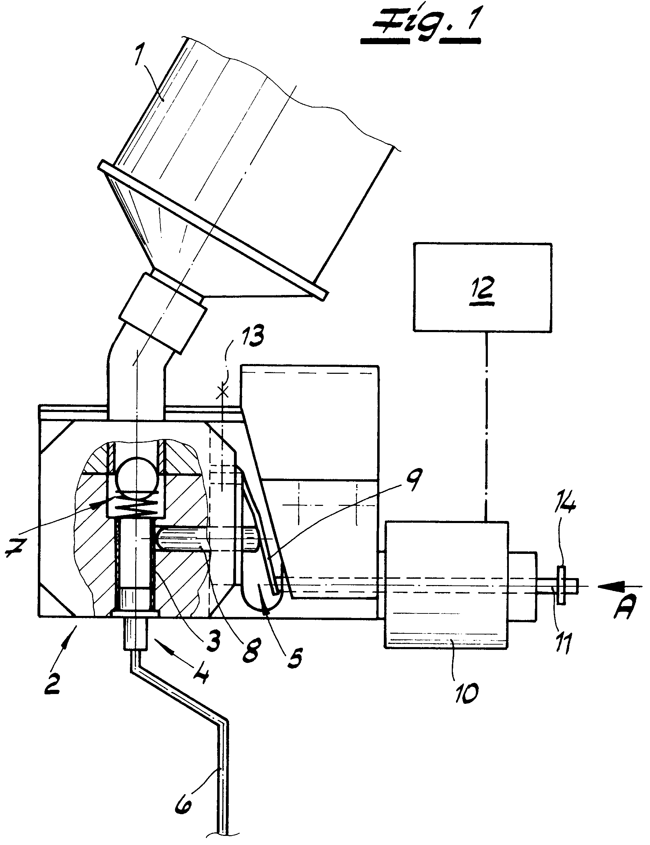

Die Dosierpumpe 2 besitzt eine aus einem Schlauchabschnitt 3 bestehende Pumpenkammer, die über ein Rückschlagventil 7 an den Fluidbehälter 1 angeschlossen ist, welches Rückschlagventil 7 bei Druckaufbau in der Pumpenkammer 3 schließt. Insoweit wird insbesondere auf die Schnittdarstellung der Dosierpumpe in der Fig. 1 verwiesen. Die Betätigungseinrichtung 5 besteht aus einem quer zur Achse des Schlauchabschnittes 3 beweglichen Quetschstößel 8 und einem Betätigungshebel 9 für den Quetschstößel 8. Über den Quetschstößel 8 und mit dem Betätigungshebel 9 ist der Schlauchabschnitt 3 zusammenquetschbar, der Quetschstößel 8 und der Betätigungshebel 9 sind zurückstellbar. Das kann wie beschrieben über Rückstellfedern oder auch über die Rückstellkraft des Schlauchabschnittes 3 erfolgen. Auf dem Betätigungshebel 9 arbeitet ein Hubmagnet 10 mit einer den Betätigungshebel 9 beaufschlagenden Stellstange 11, die zurückstellbar ist. Nur angedeutet wurde, daß der Hubmagnet 10 mit Hilfe einer elektrischen Steuereinrichtung 12 zeitabhängig und/oder fluidbedarfsabhängig steuerbar ist.

Die Fluidaustrittsdüse 4 kann über ein federbelastetes Überströmventil an die Pumpenkammer 3 angeschlossen sein, was nicht gezeichnet wurde. Im Rahmen der Erfindung liegt es aber auch, was nicht gezeichnet wurde, daß für die Fluidaufnahme eingerichtete Volumen in Strömungsrichtung des Fluids hinter der Pumpenkammer 3 sowie den Strömungswiderstand dieser Bauteile, einschließlich der Fluidaustrittsdüse 4, so einzurichten, daß bei der Rückstellbewegung des Quetschstößels 8 keine Luft in die Pumpenkammer 3 eindringt.

Bei dem erfindungsgemäßen Apparat kann die Dosierung auf sehr einfache Art und Weise verwirklicht werden, nämlich dadurch, daß der Betätigungshebel 9 einen dosierend wirkenden Stellweg aufweist, der durch einen verstellbaren Anschlag 13, z. B. eine Schraube, einstellbar ist, so daß die Dosierung über den Stellweg des Betätigungshebels 9 erfolgt. In diesem Falle besteht die Möglichkeit, mit einem besonders einfachen Hubmagneten 10 zu arbeiten, der einen vorgegebenen Hubweg aufweist, der auf besondere Art und Weise verwirklicht ist, nämlich einerseits durch einen festen oberen Anschlag 14 und andererseits nach Maßgabe der gewünschten Dosierung durch den Stellweg des Betätigungshebels 9 begrenzt ist. Im Rahmen der Erfindung liegt es auch, den Hubweg des Hubmagneten 10 über dessen Magnetspulensystem und gegebenenfalls mechanische Anschläge zu begrenzen, was nicht gezeichnet wurde.

Bei dem erfindungsgemäßen Apparat kann der Fluidbehälter 1 als ein vom Atmosphärendruck beaufschlagter Behälter ausgeführt sein. Um einen solchen Behälter mag es sich in den Fig. handeln. Das Fluid in dem Fluidbehälter 1 kann aber auch von einem im Fluidbehälter 1 erzeugten Gasdruck beaufschlagt sein.

Die elektrische Steuereinrichtung 12 kann so ausgewählt werden, daß der erfindungsgemäße Apparat für die verschiedensten Einsätze brauchbar ist. Insoweit wird auf die Patentansprüche 8, 9 und 10 verwiesen.

## Patentansprüche

1. Apparat für die dosierte Abgabe von einem Fluid, insbesondere von einem Schmiermittelfluid, mit
Fluidbehälter (1),
mit dem Fluidbehälter (1) in Verbindung stehender Dosierpumpe (2) mit Pumpenkammer (3),
an die Pumpemkammer (3) angeschlossener Fluidaustrittsdüse (4) und
Betätigungseinrichtung (5) für die Dosierpumpe (2),
wobei die Kombination der folgenden Merkmale verwirklicht ist:
a) Die Dosierpumpe (2) besitzt eine aus einem Schlauchabschnitt (3) bestehende Pumpenkammer, die über ein Rückschlagventil (7) an den Fluidbehälter (1) angeschlossen ist, welches Rückschlagventil (7) bei Druckaufbau in der Pumpenkammer (3) schließt,
b) die Betätigungseinrichtung (5) besteht aus einem quer zur Achse des Schlauchabschnitts (3) beweglichem Quetschstößel (8) und einem Betätigungshebel (9) für den Quetschstößel (8), mit dem der Schlauchabschnitt (3) zusammenquetschbar ist und der zurückstellbar ist,
c) auf den Betätigungshebel (9) arbeitet ein Hubmagnet (10) mit einer den Betätigungshebel (9) beaufschlagenden Stellstange (11), die zurückstellbar ist,
wobei der Hubmagnet (10) mit Hilfe einer elektrischen Steuereinrichtung (12) zeitabhängig und/oder fluidbedarfsabhängig steuerbar ist.

2. Apparat nach Anspruch 1, wobei die Fluidaustrittsdüse (4) über ein Überströmventil an die Pumpenkammer (3) angeschlossen ist.

3. Apparat nach einem der Ansprüche 1 oder 2, wobei der Betätigungshebel (9) einen dosierend wirkenden Stellweg aufweist, der durch einen verstellbaren Anschlag (13), z. B. durch eine Schraube, verstellbar ist, und wobei die Dosierung über den Stellweg des Betätigungshebels (9) erfolgt.

4. Apparat nach Anspruch 3, wobei der Hubmagnet (10) einen vorgegebenen Hubweg aufweist, der einerseits durch einen festen oberen Anschlag (14) und andererseits nach Maßgabe der gewünschten Dosierung durch den Stellweg des Betätigungshebels (9) begrenzt ist.

5. Apparat nach einem der Ansprüche 1 oder 2, wobei der Hubweg des Hubmagneten (10) über dessen Magnetspulensystem und gegebenenfalls mechanische Anschläge begrenzt ist.

6. Apparat nach einem der Ansprüche 1 bis 5, wobei der Fluidbehälter (1) als ein vom Atmosphärendruck beaufschlagter Behälter ausgeführt ist.

7. Apparat nach einem der Ansprüche 1 bis 5, wobei das Fluid im Fluidbehälter (1) von einem im Fluidbehälter (1) erzeugten Gasdruck beaufschlagt ist.

8. Apparat nach einem der Ansprüche 1 bis 7, wobei die Steuereinrichtung (12) den Hubmagneten (10) mit einstellbarer Impulsdauer beaufschlagt.

9. Apparat nach einem der Ansprüche 1 bis 8, wobei die Steuereinrichtung (12) den Hubmagneten (10) nach Maßgabe eines Zeitrelais taktweise steuert.

10. Apparat nach einem der Ansprüche 1 bis 9, für die Verwendung an einem Kraftfahrzeug, wobei die Steuereinrichtung (12) den Hubmagneten (10) direkt oder indirekt nach Maßgabe der Drehzahl des Motors und/oder nach Maßgabe der Geschwindigkeit des Kraftfahrzeuges steuert.
